# EUROPEAN PATENT SPECIFICATION

(11) **EP 1 337 493 B1**
(45) Date of publication and mention of the grant of the patent: **01.09.2004**
(21) Application number: 01975018.1
(22) Date of filing: 05.09.2001
(51) Int. Cl.: C04B 2/00

(54) **FIBROUS MIXTURE FOR CONCRETE**
FASERMISCHUNG FÜR BETON
MELANGE FIBREUX POUR BETON

(30) Priority: 05.09.2000 NL 1016105
(43) Date of publication of application: 27.08.2003
(73) Proprietor: Harex Nederland B.V., 3089 KB Rotterdam (NL)
(72) Inventor: VERWAARD, Johannes, NL-3089 KB Rotterdam (NL)
(74) Representative: Prins, Adrianus Willem, Mr. Ir.
(86) International application number: PCT/NL2001/000657
(87) International publication number: WO 2002/020421

(56) References cited:
- EP-A- 0 087 496
- EP-A- 0 098 825
- DE-A- 19 654 502
- ROSSI P ET AL: "Les betons fibres a ultra-hautes performances. L'experience actuelle du LCPC" BULL LAB PONTS CHAUSSEES;BULLETIN DES LABORATORIES DES PONTS ET CHAUSSEES JUL-AUG 1996 LAB CENTRAL DES PONTS ET CHAUSSEES, PARIS, FRANCE, no. 204, July 1996 (1996-07), pages 87-96, XP000964601

## Description

The invention relates to a premix for improving the tensile strength, toughness and the liquid-tightness of set construction materials derived from a suspension, in particular concrete. The invention also relates to a method for manufacturing a concrete mortar.

What is meant by concrete in this application is the mixture, known to the skilled person, of solid elements, among which cement, sand and, possibly, stones (understood to include: gravel, rubble, grit, slag, *et cetera*), suitable to make concrete objects or constructions (such as floors, walls, tunnels or parts thereof) therefrom in a manner known per se.

What is meant by mortar in this application is the slurry obtained by mixing the solid constituents of the setting construction material with water. Other than in concrete constructions, the invention can be used in other setting construction materials based on cement.

What is meant in this context by toughness is at least the extent to which the cracked material is resistant to tensile force.

What is meant in this context by tensile strength is at least the extent to which the material is resistant to tensile force without crack formation occurring.

Rossi *et al*. (Bulletin des Laboratoires des Ponts et Chaussées **204** (1996) réf. 4025, pp. 87-95) describe concrete containing a mix of long and short metal fibres, wherein the longer fibres are provide with hooks. Both the short and the long fibres are made from drawn metal.

From DE-A-42 26 744, fibres are known which can be used for reinforcing concrete or the like. These known fibres substantially consist of a stretched length of wire with hook-like deformations at both ends. Research by the present inventors has shown that such known fibres can be used in concrete mortar to increase the toughness of the eventual construction. It is noted that this effect of the fibres mentioned on the toughness is not known from the patent application mentioned. "Hook-like fibres" are understood to include, besides the fibres known from DE-A-42 26 744, other fibres consisting of a stretched length of wire, which, for anchoring, are provided with a curved or bent part at the two ends.

Although by adding such hook-like fibres an improvement as to the toughness of the eventual construction can be obtained, which improvement is similar to the improvement obtained with a conventional reinforcement, the use of these known fibres has as a drawback that other properties, in particular the tensile strength of the eventual construction, are not, or to an insufficient extent, influenced by the use of these known fibres. Further, such constructions are not liquid-tight. This is the result of small cracks which can occur in the concrete. Another drawback is that these known fibres often have the tendency to lump into a ball (likened to a hedgehog or owl pellet in technical usage) if they are mixed with a concrete mortar or other mortar.

The present invention contemplates solving these and other problems.

It has been found that these problems can be prevented, at least to a large extent, with a premix for improving the tensile strength and the toughness of set construction materials derived from a suspension, which comprises fibres which are rough on at least a part of the fiber surface, and elongated fibres with hook-like deformations at at least both ends. It has been found that the fibres which are rough at the surface have a tensile strength enhancing effect on the eventual construction. The elongated fibres with hook-like deformations have a toughness enhancing effect on the eventual construction. By selecting the mutual ratio of the two types of fibres according to the invention, the mechanical properties of the eventual construction can be influenced in a manner which was not possible before.

Preferably, per m³ of mortar, at least 15 kg of toughness enhancing fibres are used. With less than 15kg/m³, the effect on the toughness is hardly observable anymore. In principle, it holds that the more of these fibres are used, the greater the eventual toughness will be. Hence, in principle, there is no upper limit. Up to 100 kg/m³ can still be used and results in a proportionally enhanced toughness. However, for typical uses an amount of toughness enhancing fibres of at most approximately 45 kg/m³ usually suffices.

For similar reasons as mentioned hereinabove, the amount of tensile strength enhancing fibre used has a lower limit of approximately 10 kg/m^{3*}. The upper limit is, in principle, also unlimited. Up to 120 kg/m³ can still be used with a good result. However, for a typical concrete use, a maximum of approximately 55 kg/m³ suffices.

What is meant by a premix is a mixture destined to be supplemented with other ingredients. A premix of fibres according to the invention contains tensile strength enhancing and toughness enhancing fibres. This premix can be dosed to a mortar in a simple manner, for instance with the aid of a weighing and vibrating apparatus.

The tensile strength enhancing fibres are elongated fibres of a dimension of typically some centimeters. Suitable tensile strength enhancing fibres for use according to the invention are described in EP-A-0 087 496. Here, fibres are described which have been obtained by cutting steel to form chips. Ingot steel (St 52) is very suitable. The tensile strength enhancing fibres need to be rough on at least one side, for instance in that on at least a part of the surface there are projections of typically some tenths of millimetres, spaced apart a distance of also typically some tenths of millimetres, such that they can engage the concrete optimally to prevent deformation of the concrete. Preferably, tensile strength enhancing fibres are used with a largest dimension of 15 - 60 mm. When the fibres are smaller than 15 mm, hardly any effect can be observed anymore. Fibres larger than approximately 60 mm are generally hard to distribute or process in another manner. For typical uses of concrete, milled fibres of 30 - 60 mm are very suitable. Preferably, the length is 25 - 35 mm. The greatest width of the tensile strength enhancing fibres is typically some millimeters. Good results are obtained with a greatest width of 3.5 - 4 mm. Preferably, the fibres are bent lengthwise, such that they have a bent angle of at least 20°. Preferably, the fibres are slightly twisted and curved so as to be sickle-shaped.

Particularly suitable toughness enhancing elongated fibres with hook-like deformations on at least both ends are described, for instance, in the above-mentioned DE-A-42 26 744, the content of which patent publication is understood to be incorporated herein. Preferably, toughness enhancing fibres of a largest dimension of 45 - 60 mm are used. When the fibres are smaller than 45 mm, hardly any effect on the toughness can be observed anymore, although this lower limit is strongly dependent on the use contemplated. When used in high strength concrete, for example, good results can still be obtained with fibres of a length of up to 15 mm. Fibres longer than approximately 60 mm are generally hard to distribute or to process otherwise. The toughness enhancing fibres must have a relatively smooth surface between the hook-like deformations, so that, during stretching, they can easily slide by the non-hooked-up part thereof through the set construction material. The modulus of elasticity of the toughness enhancing fibres is typically at least about 1000 N/m².

Further, a particular advantage can be obtained with a premix which further comprises polypropylene fibres. Highly suitable are polypropylene fibres in the form of so-called "angel's hair", i.e. round, fibrillated polypropylene fibres having a diameter of at most a few tens of micrometers, for instance 10-30 µm, typically approximately 20 µm, and a length of typically 10 - 15 mm. The density of the polypropylene is approximately 0.90 - 0.95 kg/m³. Surprisingly, this additive appears to have as a result that the setting of the construction material proceeds more uniformly, so that the quality of the construction material improves. In particular, the liquid-tightness of the concrete is considerably improved. This is the result of the fact that the polypropylene fibres swell so that they can retain the moisture. Thus, the water becomes more uniformly available for the chemical reactions necessary for the setting process. As a result, the formation of cracks during setting is prevented.

Another important advantage of the use of polypropylene fibres in concrete is that the fire resistance of the concrete is improved. As the polypropylene fibres melt at approximately 160°C, pores are formed in the concrete matrix. The pores formed offer an expansion possibility so that formation of cracks is delayed. As a result, the construction maintains its strength longer upon exposure to high temperatures.

Preferably, the polypropylene fibres are used in an amount of 0:5 to approximately 3 kg/m³ at a maximum. Usually, for typical uses, no more than approximately 0.9 kg/m³ of polypropylene fibres needs to be used.

The tensile strength enhancing and/or the toughness enhancing fibres are preferably of metal, and more preferably of steel. It has appeared that this is a low-cost material meeting the requirements imposed. In particular, the tensile strength enhancing rough fibres are obtained by cutting steel, for instance chippings obtained by milling of steel parts, preferably special ingot steel (St 52).

The toughness enhancing fibres can be manufactured from wire or band. Preferably, drawn wire is used.

The premix of tensile strength enhancing and toughness enhancing fibres and optionally polypropylene fibres can, optionally after adding other aggregates, be added to a mortar, which is then further processed in the usual manner. Adding the fibrous premix to the concrete mortar is done both in a concrete mortar plant and on a building site.

In case the fibres are mixed with the mortar in the mortar plant, the fibres can be stored in silos and be dosed to the concrete mortar already present in a mixer of the plant or a truck by means of, for instance, a vibrating mechanism. By monitoring the weight of the fibres to be mixed, the exact amount of fibres being dosed can be registered. After this, all is mixed. The mixture thus formed is transported to the building site in the usual manner for further processing. The fibrous premix can also be added to the cement mortar in the truck on the building site.

The concrete constructions which are obtained by the use of such a concrete mortar have improved properties as to toughness and tensile strength. By additionally using the polypropylene fibres, constructions can be made which, moreover, have fewer shrinkage cracks. Moreover, the cracks which may occur are more limited in number. The cracks which may occur are smaller than in constructions manufactured from conventional concrete with or without traditional reinforcement. As a result, it is possible, inter alia, to cover a larger surface in the case of elastically supported floors, i.e. floors which are supported by, for instance, a layer of sand or in other ways, for instance a layer of polystyrene foam.

Also, with concrete constructions which are supported by means of a foundation, such as driven piles, the fibrous mixture according to the invention can be used in an advantageous manner. In particular, floors can be made having a smaller thickness and/or having a larger unsupported length, i.e. the piles of the foundation can be arranged at greater intermediate distances.

Naturally, the fibrous premix according to the invention can also be used in combination with a conventional reinforcement, such as braided steel wires.

With the improved properties of the concrete obtained, a mortar provided with the fibrous premix according to the invention is particularly suitable for the manufacture of larger constructions, such as floors, walls, tunnels or parts thereof. As a result, fewer joints suffice, or they can even be omitted altogether. It has been found that with the mortar according to the invention constructions can be made whose toughness is such that it becomes possible to realize large spans.

A considerable improvement is also found with regard to the structure of the concrete. It is known that, during setting, concrete always cracks to some extent. These micro-cracks are characteristic of concrete. By using the fibrous premix according to the invention, it has appeared that the R-value (resistance/bending tensile strength) is considerably improved. The use of the fibrous mixture, in particular of the toughness enhancing fibre, yields less shrinkage during setting, so that the surface can be enlarged. As larger floor parts can be made, there are fewer joints in the floor, so that the risk of damage decreases and the liquid-tightness increases further.

The invention further relates to a method for manufacturing a concrete mortar, comprising mixing a concrete mortar with a fibrous mixture as described hereinabove. The toughness enhancing and tensile strength enhancing fibres and optionally the polypropylene fibres can be added separately to the mortar but they can also be mixed first, after which this fibrous mixture is added to the mortar. This last embodiment, in which the fibres are added as a premix to the mortar, is preferred.

It has further appeared that if the fibres are mixed in a particular order, a mortar with improved properties is obtained. According to this preferred embodiment, onto a first layer of the tensile strength enhancing fibres, a layer of the toughness enhancing fibres is applied. As a result, the above-mentioned problem of lumping of these fibres does not occur or occurs to a strongly reduced extent. Applying the fibres can be done, for instance, by pouring them on a conveyor belt. It has appeared that if the method is carried out in this order, this can prevent the toughness enhancing fibres hooking together, as a result of which they would stick together, which is undesirable. When entanglement is avoided, the hook-like fibres too will be uniformly distributed through the concrete, so that the desired improvement of mechanical properties is ensured.

Another particular embodiment of the method according to the invention further relates to a method wherein a test piece is cast from the mortar obtained, which is examined for, inter alia, toughness, tensile strength and/or liquid-tightness. Only then is the mortar transported to the buyer in the usual manner. The advantage is that the furnished mortar can be certified and guaranteed in relation to the toughness, tensile strength and liquid-tightness of the eventual construction.

By accurately measuring the amount of toughness and tensile strength enhancing fibres and optionally polypropylene fibres, as well as the amount of mortar, a mortar according to the invention can be obtained whose specifications in relation to the mechanical properties of the eventual concrete, in particular the tensile strength, toughness and liquid-tightness, are substantially known in advance. The data relating to the properties of the eventual concrete can then be mentioned in the certificate furnished with the concrete mortar.

Weighing the different ingredients can be done in a manner known to the skilled person, for instance by dosing and negative weighing from silos.

According to the.invention, the mechanical properties of the concrete can be controlled in a reproducible manner.

According to the invention, low-tear floors can be obtained. Another particular advantage is that the use of the fibrous mixture leads to the reinforcement being well distributed over the eventual construction, in particular at the edges and in the corners. Thus, for instance, floors can be made which are properly provided with reinforcement in the corners and edges. This is of great importance with constructions which may be heavily loaded precisely at the edges, such as concrete slabs for airstrips of airports and the like. With the improved mechanical properties obtained according to the invention, thinner floors can suffice.

## Claims

1. A premix for improving the tensile strength and the toughness of set construction materials derived from a suspension, comprising tensile strength enhancing fibres which are rough at at least a part of the fibre surface, and toughness enhancing elongated fibres with hook-like deformations on at least both ends.

2. A premix according to the preceding claim, wherein the tensile strength enhancing fibres have a largest dimension of 15 - 60 mm, preferably of 25 - 35 inm.

3. A premix accoroing to any one of the preceding claims, wherein the tonghaess enhancing fibres have a largest dimension of 45 - 60 mm.

4. A premix according to any one of the preceding claims, further comprising polypropylene fibres, which polypropylene fibres preferably have a diameter of 10 - 30 µm and a length of 10 - 15 mm.

5. A premix according to any one of the preceding claims, wherein the tensile strength enhancing and/or the toughness enhancing fibres are of metal, preferably of steel.

6. A premix according to claim 5, wherein the tensile strength enhancang fibres are obtained by cutting metal objects, preferably by means of a milling operation.

7. A premix according to claim 5 or 6, wherein the toughness enhancing fibres are manufactured from drawn metal.

8. A concrete marear, obtained from a premix according to any one of the preceding claims.

9. A concrete mortar according to claim 8, wherein the content of toughness enhancing fibres is 15 - 45kg/m³, the content of tensile strength enhancing fibre is 10 - 55 kg/m³; and/or wherein the content of polypropylene fibres is 0.5 - 0.9 kg/m³.

10. The use of a premix or a concrete mortar according to any one of the preceding claims in the manufacture of concrete constructions, such as floors, walls, tunnels and thin-walled constructions.

11. A concrete floor or part of a floor, with a free span of at least 1 m, which floor or part of a floor contains a premix according to any one of claims 1-7.

12. A method for manufacturing a concrete mortar, comprising mixing a concrete mortar with the tensile strength enhancing fibres, toughness enhancing fibres and optionally polypropylene fibres, which fibres are as mentioned in any one of the preceding claims 1 - 7.

13. A method according to claim 12, wherein the mixing is done by adding a premix to the concrete mortar, which premix is obtained by applying onto a first layer of the tensile strength enhancing fibres a second layer of the toughness enhancing fibres.

14. A method according to any one of claims 12 or 13, followed by a step in which the tensile strength and toughness of a specimen obtained by application of said mortar is determined, such that said mortar can be certified as regards the tensile strength and toughness properties in set condition.

15. A method according to any one of claims 12 -14, wherein the mutual weight ratios of the fibres and the mortar are registered.

16. A method according to any one of claims 12 - 15, wherein the respective amounts of fibre and mortar are selected such that a predetermined combination of tensile strength and toughness is obtained in a workpiece manufactured from the concrete mortar.

17. A concrete construction, obtained by using a premix according to any one of claims 1 - 7, by setting of a concrete mortar according to any one of claims 8 - 9 or with a method according to any one of claims 12 - 16.

## Patentansprüche

1. Vormischung zum Verbessern der Zugfestigkeit und der Zähigkeit von von einer Suspension stammenden abgebundenen Betonmaterialien, wobei die Vormischung die Zugfestigkeit verbessernde Fasern, die auf mindestens einem Teil der Faserfläche aufgeraut sind, und die Zähigkeit verbessernde längliche Fasern, die mit hakenartigen Verformungen mindestens an beiden Enden versehen sind, aufweist.

2. Vormischung nach dem vorhergehenden Anspruch, bei der die die Zugfestigkeit verbessernden Fasern eine maximale Abmessung von 15-60 mm, vorzugsweise 25-35 mm, aufweisen.

3. Vormischung nach einem der vorhergehenden Ansprüche, bei der die die Zähigkeit verbessernden Fasern eine maximale Abmessung von 45-60 mm aufweisen.

4. Vormischung nach einem der vorhergehenden Ansprüche, ferner mit Polypropylenfasern, die vorzugsweise einen Durchmesser von 10-30 µm und eine Länge von 10-15 mm aufweisen.

5. Vormischung nach einem der vorhergehenden Ansprüche, bei der die die Zugfestigkeit und/oder die Zähigkeit verbessernden Fasern aus Metall, vorzugsweise Stahl, gefertigt sind.

6. Vormischung nach Anspruch 5, bei der die die Zugfestigkeit verbessernden Fasern durch Abschneiden von Metallgegenständen, vorzugsweise durch Fräsen, erhalten werden.

7. Vormischung nach Anspruch 5 oder 6, bei der die die Zähigkeit verbessernden Fasern aus gezogenem Metall hergestellt sind.

8. Betonmörtel aus einer Vormischung nach einem der vorhergehenden Ansprüche.

9. Betonmörtel nach Anspruch 8, bei dem der Gehalt an die Zähigkeit verbessernden Fasern 15-45 kg/m³ und der Gehalt an die Zugfestigkeit verbessernden Fasern 10-55 kg/m³ beträgt; und/oder der Gehalt an Polypropylenfasern 0,5-0,9 kg/m³ beträgt.

10. Verwendung einer Vormischung oder eines Betonmörtels nach einem der vorhergehenden Ansprüche zur Herstellung von Betonkonstruktionen, wie z. B. Böden, Wänden, Tunneln und dünnwandigen Konstruktionen.

11. Betonboden oder Teil eines Bodens mit einer freien Spannweite von mindestens 1 m, wobei der Boden oder der Teil des Bodens eine Vormischung nach einem der Ansprüche 1-7 aufweist.

12. Verfahren zum Herstellen eines Betonmörtels, mit dem Schritt des Mischens des Betonmörtels mit die Zugfestigkeit verbessernden Fasern, die Zähigkeit verbessernden Fasern und wahlweise Polypropylenfasern, die in einem der vorhergehenden Ansprüchen 1-7 aufgeführt sind.

13. Verfahren nach Anspruch 12, bei dem beim Mischen eine Vormischung zu dem Betonmörtel zugegeben wird, wobei die Vormischung durch Aufbringen einer zweiten Schicht von die Zähigkeit verbessernden Fasern auf eine erste Schicht von die Zugfestigkeit verbessernden Fasern erhalten wird.

14. Verfahren nach einem der Ansprüche 12 oder 13, mit einem weiteren Schritt, bei dem die Zugfestigkeit und die Zähigkeit einer durch Aufbringen des Mörtels erhaltenen Probe bestimmt wird, so dass der Mörtel hinsichtlich der Zugfestigkeits- und Zähigkeitseigenschaften in abgebundenem Zustand zertifiziert werden kann.

15. Verfahren nach einem der Ansprüche 12-14, bei dem die Gewichtsverhältnisse der Fasern und des Mörtels zueinander registriert werden.

16. Verfahren nach einem der Ansprüche 12-15, bei dem die jeweiligen Mengen an Fasern und Mörtel derart ausgewählt sind, dass eine vorbestimmte Kombination aus Zugfestigkeit und Zähigkeit in einem aus dem Betonmörtel hergestellten Werkstück erhalten wird.

17. Betonkonstruktion, die durch Verwenden einer Vormischung nach einem der Ansprüche 1-7, durch Abbindenlassen eines Betonmörtels nach einem der Ansprüche 8-9 oder durch Anwenden eines Verfahrens nach einem der Ansprüche 12-16 erhalten wird.

## Revendications

1. Prémélange pour améliorer la résistance à la traction et la ténacité de matériaux de construction pris provenant d'une suspension, comprenant des fibres augmentant la résistance à la traction qui sont rugueuses au moins au niveau d'une partie de la surface des fibres, et des fibres allongées augmentant la ténacité avec des déformations en forme de crochets sur au moins les deux extrémités.

2. Prémélange selon la revendication précédente, où les fibres augmentant la résistance à la traction ont une plus grande dimension de 15-60 mm, de préférence de 25-35 mm.

3. Prémélange selon l'une quelconque des revendications précédentes, où les fibres augmentant la ténacité ont une plus grande dimension de 45-60 mm.

4. Prémélange selon l'une quelconque des revendications précédentes comprenant en outre des fibres de polypropylène, lesquelles fibres de polypropylène ont de préférence un diamètre de 10-30 µm et une longueur de 10-15 mm.

5. Prémélange selon l'une quelconque des revendications précédentes, où les fibres augmentant la résistance à la traction et/ou augmentant la ténacité sont en métal, de préférence en acier.

6. Prémélange selon la revendication 5, où les fibres augmentant la résistance à la traction sont obtenues par coupe d'objets métalliques, de préférence au moyen d'une opération de fraisage.

7. Prémélange selon la revendication 5 ou 6, où les fibres augmentant la ténacité sont produites à partir de métal étiré.

8. Mortier à béton obtenu à partir d'un prémélange selon l'une quelconque des revendications précédentes.

9. Mortier à béton selon la revendication 8, dans lequel la teneur en fibres augmentant la ténacité est 15-45 kg/m³, la teneur en fibres augmentant la résistance à la traction est 10-55 kg/m³ ; et/ou dans lequel la teneur en fibres de polypropylène est 0,5-0,9 kg/m³.

10. Utilisation d'un prémélange ou d'un mortier à béton selon l'une quelconque des revendications précédentes dans la fabrication de constructions en béton, comme des planchers, des parois, des tunnels et des constructions à parois minces,

11. Plancher ou partie de plancher en béton, ayant une portée libre d'au moins 1 m, lequel plancher ou partie de plancher contient un prémélange selon l'une quelconque des revendications 1-7.

12. Procédé de fabrication d'un mortier à béton comprenant le mélange d'un mortier à béton avec des fibres augmentant la résistance à la traction, des fibres augmentant la ténacité et éventuellement des fibres de polypropylène, lesquelles fibres sont telles que mentionnées dans l'une quelconque des revendications 1-7 précédentes.

13. Procédé selon la revendication 12, où le mélange est réalisé par addition d'un prémélange au mortier à béton, lequel prémélange est obtenu par application sur une première couche des fibres augmentant la résistance à la traction d'une seconde couche des fibres augmentant la ténacité.

14. Procédé selon l'une quelconque des revendications 12 ou 13 suivi par une étape dans laquelle la résistance à la traction et la ténacité d'un échantillon obtenu par application dudit mortier sont déterminées, de telle sorte que ledit mortier peut être certifié concernant les propriétés de résistance à la traction et de ténacité à l'état pris.

15. Procédé selon l'une quelconque des revendications 12-14, où les rapports massiques mutuels des fibres et du mortier sont enregistrés.

16. Procédé selon l'une quelconque des revendications 12-15, où les quantités respectives de fibres et de mortier sont choisies de telle manière qu'une combinaison prédéterminée de résistance à la traction et de ténacité est obtenue dans une pièce fabriquée à partir du mortier à béton.

17. Construction en béton obtenue au moyen d'un préméiange selon l'une quelconque des revendications 1-7 par prise d'un mortier à béton selon l'une quelconque des revendications 8-9 ou avec un procédé selon l'une quelconque des revendications 12-16.
